# EUROPEAN PATENT APPLICATION

(11) **EP 3 656 515 A1**
(43) Date of publication of application: **27.05.2020**
(21) Application number: 19209260.9
(22) Date of filing: 14.11.2019
(51) Int. Cl.: B26D 1/46, B26D 7/22

(54) **A MACHINE FOR CUTTING MEAT WITH IMPROVED SAFETY SYSTEM**

(30) Priority: 22.11.2018 IT 201800010518
(71) Applicant: Grasselli S.p.A., 42020 Albinea (RE) (IT)
(72) Inventor: GRASSELLI, Giorgio, 42020 Albinea (REGGIO EMILIA) (IT)
(74) Representative: Gagliardelli, Fabrizio

(57) **Abstract**

The machine (1) for cutting meat comprises one or more linkage devices (10) about which is wound a blade (12) and a safety system which comprises: means (2) for detecting a dangerous condition for the safety of an operator; and a movement apparatus (4, 41, 42) configured for moving the above-mentioned linkage devices (10), following the detection of the dangerous condition.

## Description

The present invention relates to a machine for cutting meat, especially designed for cutting meat with bone, of the type also known as a "band saw" or "bone saw".

There exist prior art bone saws used in particular in the meat industry but also by butchers, fishmongers, restaurants, canteens, etc.

These machines use flexible blades equipped with a cutting edge.

In detail, the prior art machines comprise two pulleys, one of which is motor-driven, around which the blade, closed in a loop, is wound.

In use, the operator activates the machine motor, rests the product to be cut on a suitable supporting surface and pushes it against the cutting edge of the blade.

In this way, the blade passes through the product from side to side, in a transversal direction to the bone.

The operation is repeated until, from the initial product, a plurality of slices is obtained, each comprising a bone portion, such as chops, "Fiorentina" thick steaks, etc.

Since the cutting is performed manually, one of the greatest preoccupations of user companies and the manufacturers of this type of machine is the safety of the operators, with particular reference to the integrity of their hands.

At present, machines are available on the market which are equipped with safety systems designed to prevent injury to operators during use of the machine or at least to reduce the damage inflicted as much as possible. However, the prior art machines which adopt these safety systems are not without limitations and defects.

In fact, the prior art systems are based on the idea of braking the blade of the machine which, in use, is driven by the motor-driven pulley at very high speeds.

More precisely, machines with two different types of safety systems are currently available on the market.

A first safety system is designed in such a way that, in response to the detection of a dangerous condition, the blade is gradually slowed down, whilst the second type of safety system is conceived for the instantaneous locking of the blade.

The limitation of the first type of system is that before the blade has stopped completely, it is possible there is time to produce very serious injuries to the operator who might even have fingers cut off or suffer very large cuts to the hands.

As concerns the second type of safety system, the greatest limitation is constituted by the fact that the almost simultaneous blocking of the blade is only possible at the cost of the structural compromise of the kinematic mechanisms designed for actuating the blade, which results the putting out of use of the machine, which must therefore be repaired before being used again.

The technical purpose which forms the basis of the present invention is therefore to propose a machine for cutting meat which overcomes the drawbacks of the prior art.

This technical purpose is attained by the machine made according to claim 1 and by the process implemented according to claim 11.

Further characteristics and advantages of the present invention will more clearly emerge from the indicative and therefore non-limiting description of preferred, non-limiting embodiments of the machine of the invention, as illustrated in the accompanying drawings, in which:
- figure 1 is an axonometric view of the machine, in which the casing is shown in a stylised and transparent fashion;

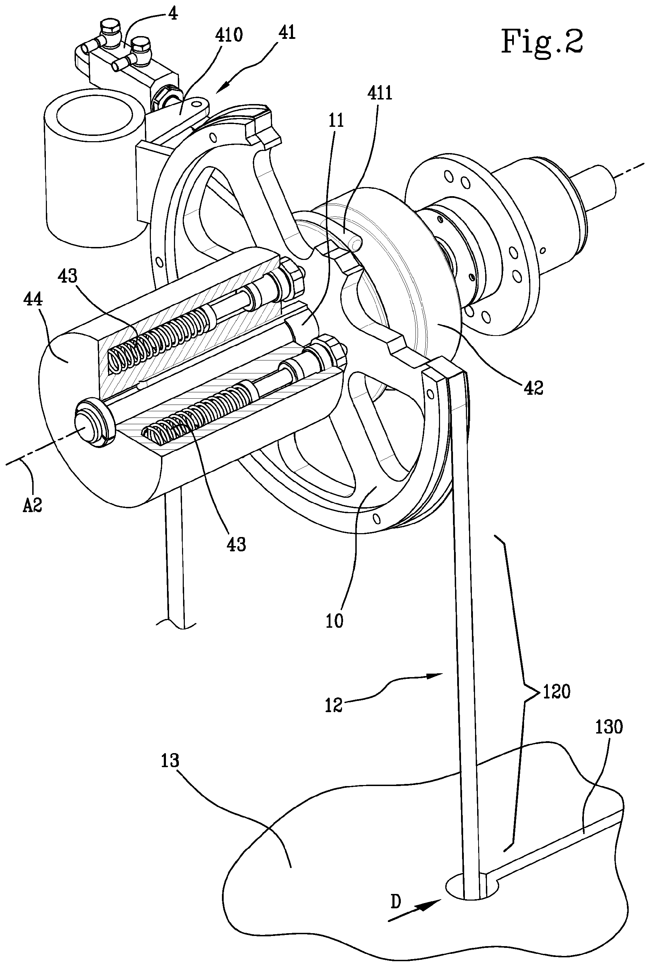

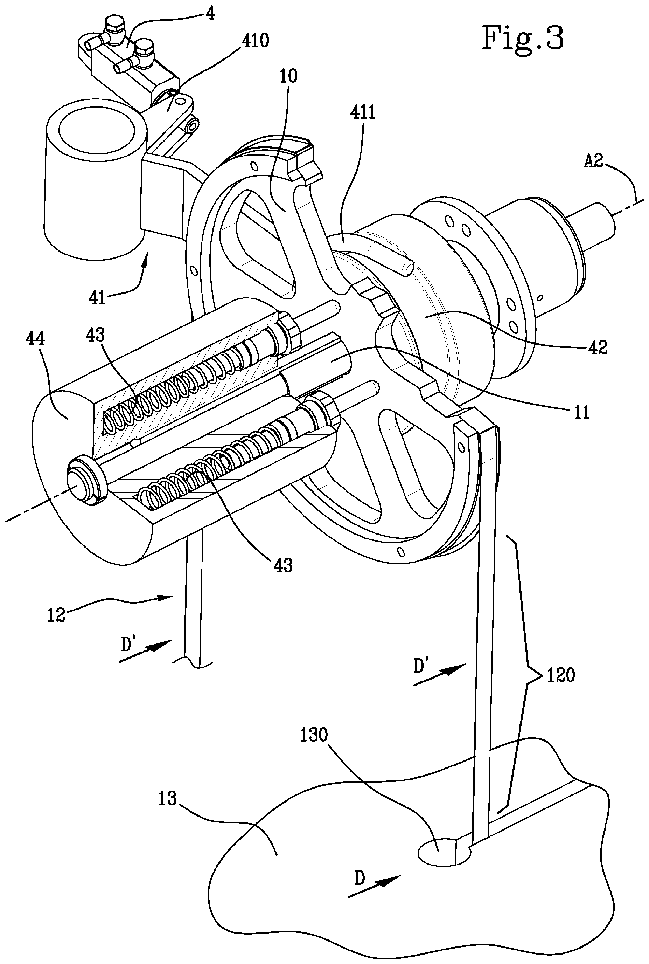

- figures 2 and 3 are partial axonometric views of components of the cutting apparatus and of the movement apparatus of the machine, represented in different operating arrangements;
- figures 4 and 5 are transversal cross sections from above of the components of the two preceding figures; and
- figure 6 is a schematic view of the processing unit of the invention.

With reference to the above-mentioned drawings, numeral 1 denotes a machine for cutting meat, especially intended for professional use and which can be used preferably for cutting meat with bone.

More in detail, the invention relates to a machine 1 for cutting meat with bone which includes an improved safety system.

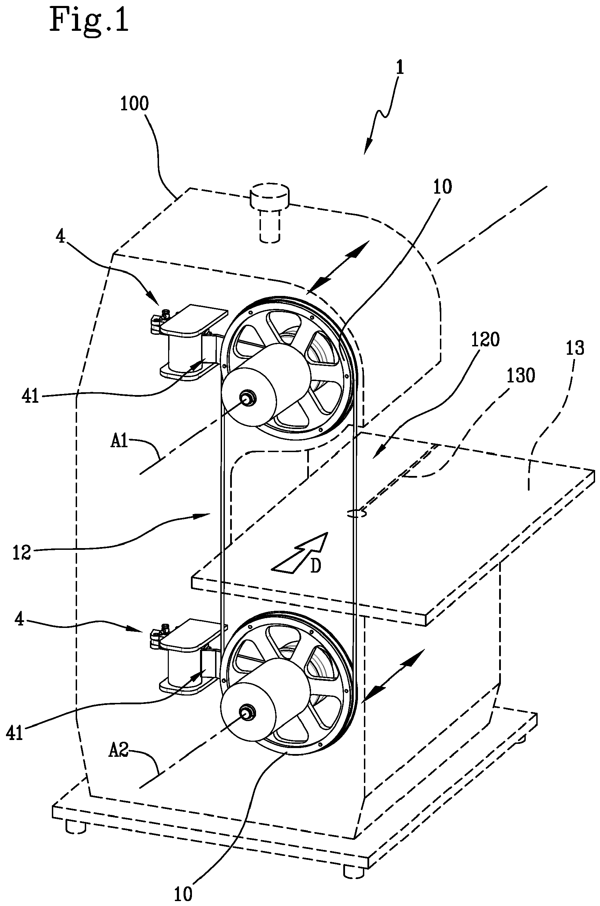

The machine 1 includes linkage devices 10, preferably consisting of two pulleys 10 positioned one above the other with horizontal axes of rotation A1, A2 and preferably positioned in the same vertical plane, about which the cutting blade 12 is looped, consisting of a roll of flexible steel (see figure 1).

At least one of the two pulleys 10 is motor-driven and draws the blade 12 in rotation.

According to an important aspect of the machine 1 described, the pulleys 10 of the invention, unlike those of the prior art, are movable and not fixed, in the sense that they can be moved in space, taking the blade 12 with them.

More in detail, as explained in more detail below, the pulleys 10 translate on their axes of rotation A1, A2 and, in practice, slide along the pins 11 on which they are keyed.

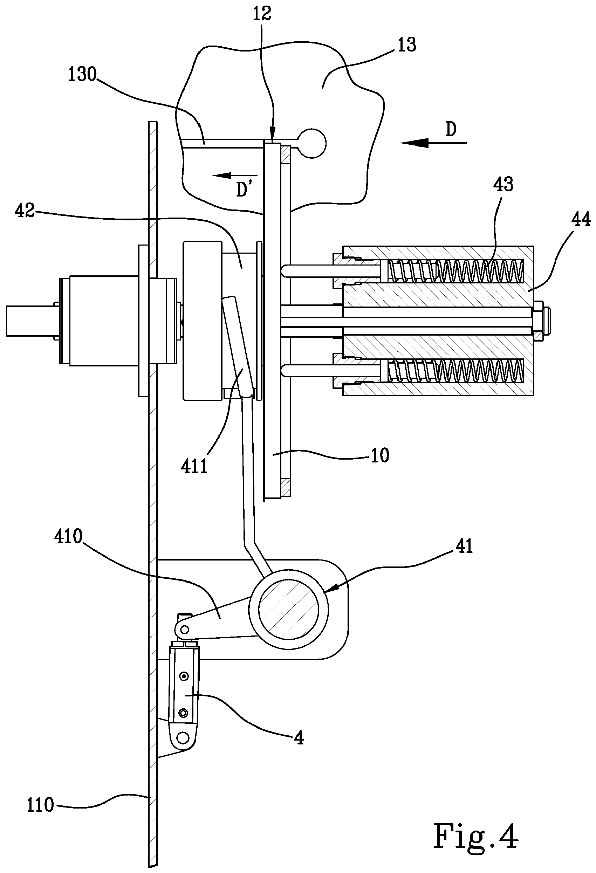

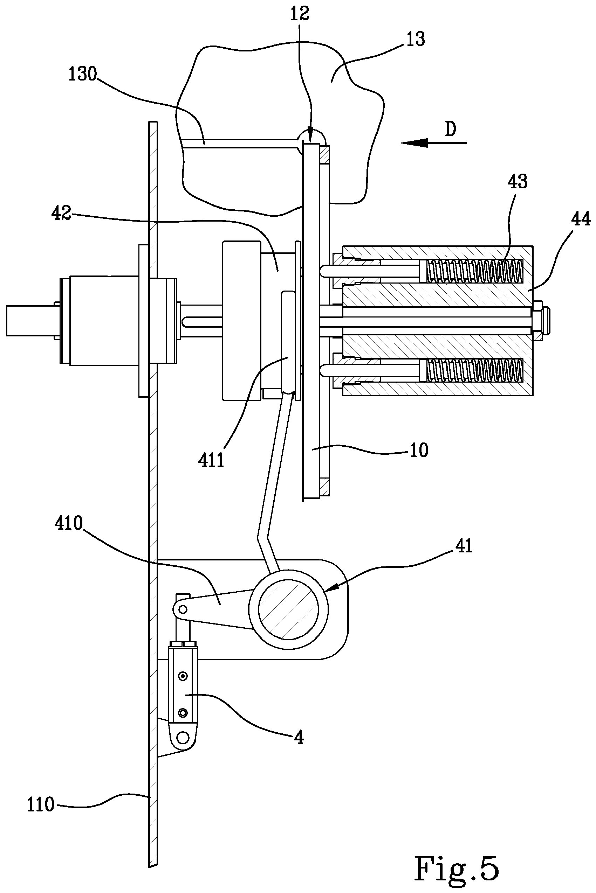

Like the prior art machines, the invention also includes a containment casing 100 which comprises in addition to the pulleys 10, the blade 12 and the motor, also a frame 110, shown schematically in figures 4 and 5, for supporting the movable or fixed components of the invention.

The casing 100 preferably covers the blade 12 except for a vertical section 120 of the above-mentioned ring, the latter constituting the sliding path of the blade 12 during use.

The casing 100 is also equipped with a supporting surface 13, at the lower part of the uncovered section 120, designed for resting the product to be cut, which is pushed by hand by the user against the wire of the blade 12, during use, according to known methods and therefore not described here. In the illustrated example, the supporting surface 13 also includes a hollow 130 for the passing-through and movement of the blade 12 during use. Therefore, in the machine 1 and, in detail, there is a feed direction of the product D (formed by the arrow of figure 1) along the supporting surface 13, which is substantially horizontal, which in practice goes from the outside towards the blade 12.

Therefore the cutting edge of the blade 12 is facing in the opposite direction, i.e. towards the operator, which meets the meat to be cut.

As will clearly emerge from the following description, the safety system of the invention is designed in such a way that, following the detection of a dangerous condition, the pulleys 10 move in a moving-away direction D' from the feed direction of the product, thereby moving the blade 12 away from the hands of the operator.

Note that the moving-away direction D' is parallel to the axes of rotation A1, A2 of the linkage devices 10.

The safety system of the invention, which is designed to avoid or minimise the risk of injury to the hands of the operator, firstly includes means 2 for detecting a dangerous condition for the safety of an operator who is using the machine 1.

In practice, the means 2 are able to check a triggering event for the safety system which consists of a situation in which the hands of the operator are or may be at risk of injury.

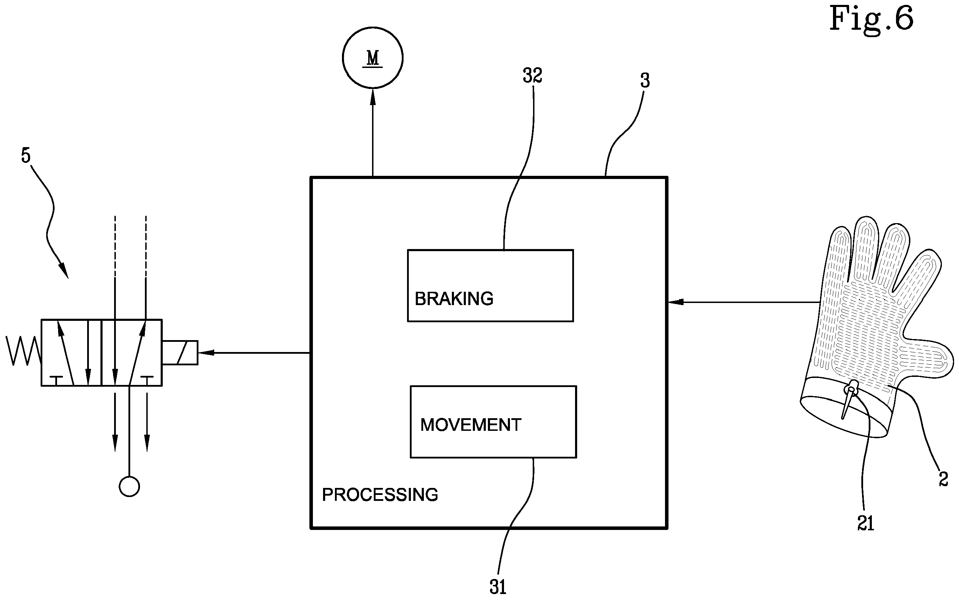

Preferably, the detection means comprise two gloves 2 (one of which is shown by way of example in figure 6), designed to be worn by the operator, configured in such a way that the safety system detects the above-mentioned dangerous condition when the gloves 2 are affected by the blade 12 of the machine 1.

The gloves 2 can be designed like those described in European patent application EP3309440 and/or European patent EP2696125 in the name of the same Applicant, which are therefore incorporated herein by reference concerning their structure and operation.

In detail, an event that could be considered to correspond to the dangerous condition is contact or cutting of the glove 2 by the blade 12.

For example, if the glove 2 comprises means for sending a signal, the interruption of the signal sent by the means, due to a cut by the blade 12, could constitute the triggering event actuating the safety system of the invention.

Also, if the means are electrical conductors, such as wires or tracks printed on the surface of the glove, a short-circuit thereof produced by the above-mentioned contact with the blade 12, made of a conductive material, could also be a triggering event.

The invention might also include detection means 2 different from the gloves as described in the foregoing, such as, for example, gloves of different types or devices illustrated in various patent publications of the Applicant or other systems, regardless of whether they use optical, electrical, magnetic or sound technologies for detecting the dangerous condition, not excluding, for example, even the use of video cameras or other means provided they are suitable for the purpose.

Generally speaking, the detection means according to the invention comprise at least one detection device 2 which, following detection of an ignition condition associated with a dangerous situation for the hands of the operator, is designed to produce or cause the emission of a danger signal.

The danger signal, or a signal produced in cascade from it, is preferably received by a processing unit 3 described below.

The safety system further comprises a movement apparatus 4, 41, 42 which, in general terms, is configured for moving at least one of the above-mentioned linkage devices 10, following the detection of the several above-mentioned dangerous conditions.

More in detail, the movement apparatus 4, 41, 42 includes rectilinear guides 11 along which it is possible to move the pulleys 10 and actuators 4 which act on respective kinematic mechanisms 41 connected to the pulleys 10, to produce a sharp, i.e. sudden movement, following the detection of the dangerous condition.

As mentioned, the guides preferably consist of the pins 11 on which the pulleys 10 are keyed.

The actuators preferably consist of a double-acting hydraulic cylinder 4 for each pulley 10, even though the use of linear actuators of a different type is not excluded, for example, for pneumatic or electromechanical operation or other purposes.

For example, the invention may comprise a rocker 41, pivoted on a vertical axis, which allows the actuator 40 to act on the respective pulley 10, in such a way as to at least transfer the thrust applied by the actuator 4 into a sliding of the pulley 10 along the pin 11 thereof.

In the example shown, the rocker 41 has an arm 410 hinged to the rod of the cylinder 40 and an arm which terminates in a sort of fork 411 the prongs of which engage the respective pulley 10 or in any case an element connected to it.

For example, the above-mentioned fork 411 may engage in a gulley of a disc 42 coupled to the pulley 10.

The linear actuator 4 is preferably normally thrusting, keeping the pulley 10 in a specific position; in the case of checking for a dangerous condition, the actuator 4 is actuated in such a way as to pull the kinematic mechanism 41 so as to draw the respective pulley 10, moving it to a position away from the usual position.

In the case of use of hydraulic cylinders 4, actuation may be obtained by using a solenoid valve 5 (illustrated in a stylised representation in figure 6) which intercepts the operating fluid of the cylinders 4 and is designed to switch following receipt of an electrical signal.

In detail, the electrical signal may be a movement signal produced by the processing unit 3 which is designed to receive the danger signal from the above-mentioned detection device 2 and is configured to consequently emit the movement signal.

Moreover, the movement apparatus 4, 41, 42 preferably comprises elastic means 43 designed to act on the linkage devices 10 and which are pre-loadable in order to urge the linkage devices 10 to move in the moving away direction from one another.

In practice, the pulleys 10 may be provided with a plurality of spiral springs 43 or other elastic means which are preloaded by the thrust of the hydraulic cylinders 4 and which can act on sliders or rods which press against the respective pulley 10.

In the example shown, each pulley 10 has a plurality of elastic means 43 angularly positioned around the axis of rotation A1, A2 thereof.

For example, the springs 43 may be contained in a housing formed inside a hollow body 44 positioned at one end of each pin 11 of the pulleys 10.

In this way, when the cylinder draws the linkage in the case of danger, the springs 43 help to overcome the inertia of the pulleys 10 and make the relative movement faster.

Further, the proposed safety system is also configured in such a way as to brake the motor (denoted schematically by the letter "M" in figure 6) which activates one of the pulleys 10 in rotation, slowing it down until it is stopped, following the detection of the dangerous condition.

In practice, the processing unit 3 is connected to the motor M, which preferably is electric and is configured to transmit thereto a braking signal once it has received the above-mentioned danger signal.

In still more general terms, the processing unit 3 can include a movement module 31 and a braking module 32 respectively configured for producing displacement and braking signals, when the detection device 2 has determined an event correlated with a dangerous condition, thereby simultaneously producing both the translation of the pulleys 10, together with the blade 12, and the rapid braking of the engine M until it stops.

The operation of the invention is described below.

During use of the machine 1, the operator wears the above-mentioned detection gloves 2, which may, for example, be connected to the processing unit 3 by transceiver means 21 and, after activating the motor M of the machine 1, repeatedly pushes the product to be cut, for example a side of pork, along the supporting surface 13 and in the feed direction D, where it encounters the blade 12 sliding and drawn by the pulleys 10 and cuts the product into pieces.

If the glove 2 comes into contact with the blade 12 or in any case the triggering event representing the dangerous condition occurs, the danger signal is sent to the processing unit 3 which, when recognised, produces a movement signal which switches the solenoid valve 5, thereby actuating the two hydraulic cylinders 4.

Due to the kinematic mechanism 41, the two pulleys 10 slide simultaneously in the moving away direction D' from the feed direction, that is, away from the hands of the operator.

At the same time, the braking signal, again produced by the processing unit 3, rapidly slows down the motor M, stopping it in a very short time.

It is therefore clear that the machine 1 of the invention completely overcomes the drawbacks of the prior art, since, if there is a situation which affects the integrity of the operator's hands, the blade 12 is not only braked until stopping, as in the prior art machines, but is immediately moved away from the zone where the hands are located, thus reducing or annulling the risk of significant changes.

All of this is achieved without having to adversely affect the structural and functional integrity of the machine 1. In effect, once the safety system is adopted and the danger has been overcome or terminated, the movement apparatus 4, 41, 42 can be returned to the normal condition, that is to say, with the pulleys 10 in the operating position.

For this purpose, a user interface may be provided for controlling the processing unit 3 so that it controls the actuators 4 in such a way as to translate the pulleys 10 to the initial position, where the blade 12 can return to normal operation.

The invention is also configured as a process for avoiding or minimising the risk of injury to an operator of a machine 1 for cutting meat, with particular reference to her or his hands.

With the described process, in meat cutting machines 1, especially with a bone, a dangerous condition is detected for the safety of the operator and, if this is determined, the cutting blade 12 is moved away from the operator. More precisely, the movement of the blade 12 can take place in the ways already illustrated in the description of the machine 1,

In still greater detail, when a belt blade 12 wound on two linkage devices 10 is made available, of which at least one is motor-driven, then the linkage devices 10 are moved instantaneously following detection of the dangerous condition.

Note that steps of the process of the invention may optionally correspond to the various functions of the machine 1 described above, including those of the processing unit 3 and of the movement apparatus 4, 41, 42 or of other components.

More specifically, the dangerous condition is determined by the fact that the hands or gloves 2 worn on the hands of the operator are affected by the blade 12 and the rotation of the blade is consequently braked until it stops.

## Claims

1. A machine (1) for cutting meat, comprising one or more linkage devices (10) about which is wound a blade (12) and a safety system which comprises:
means (2) for detecting a dangerous condition for the safety of an operator; and
a movement apparatus (4, 41, 42) configured for moving at least one of the above-mentioned linkage devices (10), following the detection of the dangerous condition.

2. The machine (1) according to the preceding claim, wherein the movement apparatus (4, 41, 42) is designed to translate the linkage devices (10) along a moving away direction (D').

3. The machine (1) according to the preceding claim, wherein the moving away direction (D') is parallel to their axes of rotation (A1, A2).

4. The machine (1) according to claim 2 or 3, in which is defined a feed direction (D) for a product to be cut transversal to the blade (12), the moving away direction (D') being in the same direction as the feed direction (D).

5. The machine (1) according to at least one of claims 2 to 4, wherein the movement apparatus (4, 41, 42) includes rectilinear guides (11) along which are movable respective linkage devices (10).

6. The machine (1) according to at least one of the preceding claims, wherein the movement apparatus (4, 41, 42) comprises at least one actuator (4) which acts on a kinematic mechanism (41) connected to a respective linkage device (10).

7. The machine (1) according to the preceding claim, wherein the actuator (4) is of a hydraulic or pneumatic type.

8. The machine (1) according to at least one of claims 2 to 7, wherein the movement apparatus (4, 41, 42) comprises elastic means (43) designed to operate on at least one of the linkage devices (10) and pre-loadable to be able to move the linkage devices (10) in the moving away direction.

9. The machine (1) according to at least one of the preceding claims, wherein the means for detecting a dangerous condition comprise a detection device (2) designed to produce a danger signal and wherein the movement apparatus (4, 41, 42) includes a processing unit (3) connected to the detection device (2) and configured to emit a movement signal, following receipt of the danger signal, the movement signal being designed to control the movement of the linkage device(s) (10).

10. The machine (1) according to the preceding claim and claim 7, wherein the movement apparatus (4, 41, 42) comprises a solenoid valve (5) which intercepts an operating fluid used by the actuator (4), the solenoid valve (5) being connected to the processing unit (3) and being designed to switch on following receipt of the movement signal, thereby being able to determine an actuation of the actuator (4).

11. A process for avoiding or minimising the risk of injury of an operator of a machine (1) for cutting meat, especially with bone, provided with a blade (12), comprising the steps of:
detecting a dangerous condition for the safety of the operator; and
moving the blade (12) of the machine (1) following the detection of the dangerous condition, moving it away from the operator.

12. The process according to the preceding claim, wherein a belt blade (12) is provided wound on two linkage devices (10) of which at least one is motor-driven, at least one of the linkage devices (10) being moved immediately following detection of the dangerous condition.

13. The process according to claim 11 or 12, wherein the dangerous condition is determined by the fact that the hands or the gloves (2) worn on the hands of the operator are touched by the blade (12).

14. The process according to claim 12 or 13, wherein the blade (12) is stopped when the dangerous condition is detected.
